# EUROPÄISCHE PATENTSCHRIFT

(11) **EP 4 311 888 B1**
(45) Veröffentlichungstag und Bekanntmachung des Hinweises auf die Patenterteilung: **24.12.2025**
(21) Anmeldenummer: 23186915.7
(22) Anmeldetag: 21.07.2023
(51) Int. Cl.: E03C 1/04, F16D 41/18, F16D 43/202, F16K 31/60

(54) **TRINKWASSERARMATUR**
DRINKING WATER FITTING
ROBINETTERIE D'EAU POTABLE

(30) Priorität: 28.07.2022 DE 202022104277 U
(43) Veröffentlichungstag der Anmeldung: 31.01.2024
(73) Patentinhaber: Gebr. Kemper GmbH + Co. KG, 57462 Olpe (DE)
(72) Erfinder: Zamponi, Michel, 57250 Netphen (DE); Fries, Stefan, 57462 Olpe (DE)
(74) Vertreter: Grünecker Patent- und Rechtsanwälte PartG mbB

(56) Entgegenhaltungen:
- EP-B1- 0 321 500
- DE-A1- 2 715 218
- KR-A- 20210 120 697

## Beschreibung

Die vorliegende Erfindung betrifft eine Trinkwasserarmatur gemäß dem Oberbegriff von Anspruch 1.

Gattungsgemäße Trinkwasserarmaturen sind beispielsweise aus KR 2021-0120697 A, DE 27 15 218 A1 und EP 0 321 500 B1 bekannt.

Es ist eine Aufgabe der vorliegenden Erfindung, einen alternativen Mechanismus zur Drehmomentbegrenzung anzugeben.

Zur Lösung dieser Aufgabenstellung weist der Drehmomentbegrenzer erfindungsgemäß einen Rastklinkenkörper mit Rastklinken auf, die mit Rastmulden des Drehgriffs im Eingriff sind, wobei die Rastmulden jeweils eine Rampenfläche aufweisen, über welche die Rastklinken bei Erreichen eines Grenzdrehmomentes im Rahmen der Drehbewegung beim Absperren der Trinkwasserarmatur aus der jeweiligen Rastmulde herausgleiten. Die Rastklinken sind vorzugsweise mit gleichen Abständen in Umfangsrichtung des Rastklinkenkörpers angeordnet und umrunden diesen. Sie ragen in der Regel in radialer Richtung vom Rastklinkenkörper ab.

Bei einer Drehung des Drehgriffs in Schließrichtung mit einem Drehmoment unterhalb des Grenzdrehmomentes wird das Drehmoment durch Anlage der Rastklinken in den Rastmulden auf den Rastklinkenkörper übertragen, der das Drehmoment an die Welle weitergibt. Ist die Trinkwasserarmatur ordnungsgemäß geschlossen und es wird weiter zugedreht, erreicht das Drehmoment ein Grenzdrehmoment, welches bewirkt, dass die Anlage zwischen den Rastmulden und den Rastklinken aufgelöst wird. Die Rastmulden und die Rastklinken gleiten daraufhin übereinander hinweg. Dabei werden die Rastklinken an den Rampenflächen nach innen gedrückt und federn nach dem Abgleiten über die Rampenfläche in der nächsten Rastmulde elastisch wieder zurück nach außen. Bei dem Zurückfedern stoßen die Rastklinken vorzugsweise gegen die Rampenfläche der nächsten Rastmulde an, was ein charakteristisches akustisches Signal erzeugt, das dem Benutzer signalisiert, dass die ordnungsgemäße Schließstellung erreicht ist.

Nach einer weiteren bevorzugten Weiterbildung der vorliegenden Erfindung liegen die Rastklinken bei einer Drehung des Drehgriffes in eine ein Öffnen der Trinkwasserarmatur bewirkenden Öffnungsdrehrichtung formschlüssig gegen einen die Rastmulde begrenzenden Anschlag an. Dadurch ist ein Öffnen der Trinkwasserarmatur mit voller Drehmomentübertragung möglich. Die Drehmomentübertragung in Öffnungsrichtung ist für gewöhnlich nicht begrenzt.

Nach einer weiteren bevorzugten Weiterbildung der vorliegenden Erfindung liegt der Anschlag auf einer Radiallinie, die mit dem Mittelpunkt der Drehbewegung fluchtet. Der Anschlag kann sich insbesondere orthogonal zur Drehrichtung erstrecken. So bildet der Anschlag eine Hürde, die von den Sperrklinken bei einer Drehung des Drehgriffs in Öffnungsrichtung nicht übersprungen werden kann.

Nach einer weiteren bevorzugten Weiterbildung der vorliegenden Erfindung liegt das Grenzdrehmoment zwischen 0,5 Nm und 4 Nm, bevorzugt zwischen 1 Nm und 3 Nm, und besonders bevorzugt zwischen 1,5 Nm und 2 Nm. Das Grenzdrehmoment ist in der Regel durch die Form und die Materialbeschaffenheit der Rastklinken bestimmt.

Nach einer weiteren bevorzugten Weiterbildung der vorliegenden Erfindung weist der Drehgriff eine die Außenumfangsfläche des Drehgriffs ausbildende Hülse auf, an deren Innenumfang die Rastmulden ausgebildet sind, die zur Übertragung des Drehmomentes mit den Rastklinken zusammenwirken und bei Erreichen eines Grenzdrehmomentes beim Absperren der Trinkwasserarmatur über die Rastklinken hinweggleiten. Die Hülse ist also sowohl außenals auch innenumfänglich mit funktionalen Flächen zur Drehmomentauf- bzw. Drehmomentweitergabe ausgebildet. Es werden entsprechend insgesamt weniger funktionale Bauteile benötigt, was die Herstellungskosten reduzieren kann.

Nach einer weiteren bevorzugten Weiterbildung der vorliegenden Erfindung sind der Rastklinkenkörper und die Hülse aus Kunststoff gebildet. Nach einer alternativen bevorzugten Weiterbildung ist die Hülse aus Metall und der Rastklinkenkörper aus Kunststoff.

Nach einer weiteren bevorzugten Weiterbildung der vorliegenden Erfindung hat der Rastklinkenkörper eine Bohrung zur verdrehfesten Aufnahme der Welle. Vorzugsweise weist die Bohrung ein zu einem Profil der Welle passendes Profil auf, sodass der Rastklinkenkörper wie eine Nabe auf die Welle aufgeschoben werden kann. Der Rastklinkenkörper ist also auch sowohl außen- als auch innenumfänglich mit funktionalen Flächen zur Drehmomentauf- bzw. Drehmomentweitergabe ausgebildet. Es werden entsprechend insgesamt weniger funktionale Bauteile benötigt, was die Herstellungskosten reduzieren kann. Für die Drehmomentübertragung auf die Welle werden inklusive der Drehmomentbegrenzung in Schließrichtung vorzugsweise nur zwei Bauteile benötigt: die Hülse und der Rastklinkenkörper. D.h. der Drehgriff wird aus der Hülse gebildet und der Drehmomentbegrenzer wird aus dem Rastklinkenkörper gebildet und nur diese beiden Teile übertragen das händisch auf den Drehgriff außenumfänglich aufgebrachte Drehmoment auf die Welle.

Vorzugsweise ist die Hülse ein einteiliges Bauteil, welches die Außenumfangsfläche des Drehgriffs und den Innenumfang mit den Rastmulden ausformt. Der Rastklinkenkörper ist bevorzugt durch ein einheitliches Bauteil gebildet, an dessen Außenumfang die Rastklinken ausgebildet sind und dessen Innenumfang verdrehfest mit der Welle gekoppelt ist.

Nach einer weiteren bevorzugten Weiterbildung der vorliegenden Erfindung sind die Rastklinken nach Art von Federarmen ausgebildet und in einer Querschnittsansicht auf den Drehgriff in eine ein Schließen der Trinkwasserarmatur bewirkenden Schließdrehrichtung geneigt und/oder gekrümmt. Die Rastklinken können gerade ausgebildet sein und sich vorzugsweise in einer zum restlichen Körper tangentialen Richtung erstrecken. Alternativ können die Rastklinken zumindest abschnittsweise gekrümmt sein, wobei die Krümmung der Rastklinken am freien Ende oder am Übergang zum Rastklinkenkörper kleiner sein kann als dazwischen.

Nach einer weiteren bevorzugten Weiterbildung der vorliegenden Erfindung weist der Rastklinkenkörper ein von den Rastklinken in axialer Richtung abragenden Zylinderabschnitt auf, der zumindest eine Rastnase aufweist, die mit zumindest einer in dem Drehgriff ausgebildeten Rastnasenaufnahme zur axialen Festlegung des Rastklinkenkörpers an dem Drehgriff zusammenwirkt. Der Drehgriff ist für gewöhnlich durch eine Schraube an der Spindel axial befestigt.

Nach einer weiteren bevorzugten Weiterbildung der vorliegenden Erfindung ist die Trinkwasserarmatur als frostsichere Trinkwasserarmatur ausgebildet. Das Gehäuse umfasst dann ein Einlassgehäuse, das die Einlassöffnung und den Ventilsitz aufweist, ein Auslassgehäuse, das die Auslassöffnung aufweist, und ein das Einlassgehäuse und das Auslassgehäuse verbindendes Zwischenrohr. Das Zwischenrohr ist derart bemessen, dass das Einlassgehäuse im Innenbereich eines Gebäudes und das Auslassgehäuse eine Außenwand des Gebäudes überragend angeordnet werden können. Es umgibt ein Verbindungsglied, das auf der einen Seite mit dem Ventilkörper verbunden ist und auf der anderen Seite mit einer Spindel in Eingriff steht, welche von dem Auslassgehäuse getragen ist und die Welle umfasst. Die frostsichere Trinkwasserarmatur weist außerdem ein Belüftungsventil auf, das eine Belüftungsöffnung freigibt, wenn der Ventilkörper dichtend gegen den Ventilsitz anliegt. Für gewöhnlich wird das Belüftungsventil bei geöffneter Armatur durch das unter Druck stehende Wasser verschlossen. Durch das Schließen der Armatur sinkt der Druck auf Atmosphärendruck, so dass das Belüftungsventil öffnet und Luft einströmen kann.

Aufgrund des Nachlaufens von Wasser aus der Trinkwasserarmatur bei der Belüftung kann bei dem Benutzer der Trinkwasserarmatur der Eindruck entstehen, der Ventilkörper sei noch nicht zur Anlage an den Ventilsitz gelangt, sodass der Drehgriff weiter zugedreht wird, was bei einer herkömmlichen frostsicheren Trinkwasserarmatur zu einer übermäßigen Beanspruchung des Ventilkörpers bzw. des Ventilsitzes führen würde. Mit der vorliegenden Erfindung hingegen wird das Risiko einer solchen übermäßigen Beanspruchung vermieden.

Die frostsichere Trinkwasserarmatur kann einen mit der Spindel oder dem Verbindungsglied zusammenwirkenden Stellkörper aufweisen, der von einer ersten Stellung in eine zweite Stellung längsverschieblich bewegt werden kann, wenn der Ventilkörper dichtend gegen den Ventilsitz angelegt wird, und hierbei derart auf das Dichtelement des Belüftungsventils einwirkt, dass dieses in der ersten Stellung des Stellkörpers die Belüftungsöffnung verschließt und in einer zweiten Stellung des Stellkörpers diese freigibt.

Statt des Stellkörpers kann auch ein federvorgespannt gehaltener Belüftungsventilkörper vorgesehen sein, durch dessen Betätigung die Belüftungsöffnung freigegeben wird, und dem ein Bimetall-Stellelement zugeordnet ist, welches oberhalb einer Grenztemperatur den Belüftungsventilkörper in einer Lage hält, in der das Dichtelement die Belüftungsöffnung verschließt. Als Grenztemperatur wird vorzugsweise eine Temperatur oberhalb von 0°C eingestellt, die regelmäßig in Monaten überschritten ist, in denen Garten- und Balkonpflanzen eine Bewässerung brauchen. Denn die frostsichere Trinkwasserarmatur wird insbesondere im Garten- und Balkonbereich von Wohnungen und Häusern eingesetzt. Bei Temperaturen um 0°C und/oder unterhalb von 0°C wird die Belüftungsöffnung beim Schließen der frostsicheren Trinkwasserarmatur geöffnet, so dass Wasser aus der abgesperrten Armatur nachlaufen und die Armatur leerlaufen kann. Dadurch wird verhindert, dass die Armatur bei Frost gesprengt wird. Der Betätigungsmechanismus des Belüftungsventils kann wie in EP 1 557 500 A1 beschrieben ausgestaltet sein, deren Inhalt hiermit in diese Anmeldung aufgenommen wird.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine perspektivische Seitenansicht auf eine an einem Gehäuse freiliegende Welle, sowie auf den Drehmomentbegrenzer, den Drehgriff und eine Abdeckplatte in Explosionsdarstellung,
- Fig. 2: eine Querschnittansicht des Drehgriffs,
- Fig. 3: eine Querschnittansicht des Drehmomentbegrenzers,
- Fig. 4: eine Querschnittansicht des Drehgriffs mit darin aufgenommenem Drehmomentbegrenzer,
- Fig. 5: die Querschnittansicht aus Fig. 4, wenn bei der Drehung des Drehgriffs in Schließdrehrichtung ein Grenzdrehmoment erreicht wird,
- Fig. 6A: eine Querschnittansicht des Drehmomentbegrenzers in einer alternativen Ausführungsform,
- Fig. 6B: eine Querschnittansicht des zu dem Drehmomentbegrenzer aus Fig. 6A gehörenden Drehgriffs, und
- Fig. 7: eine Längsschnittansicht einer frostsicheren Trinkwasserarmatur.

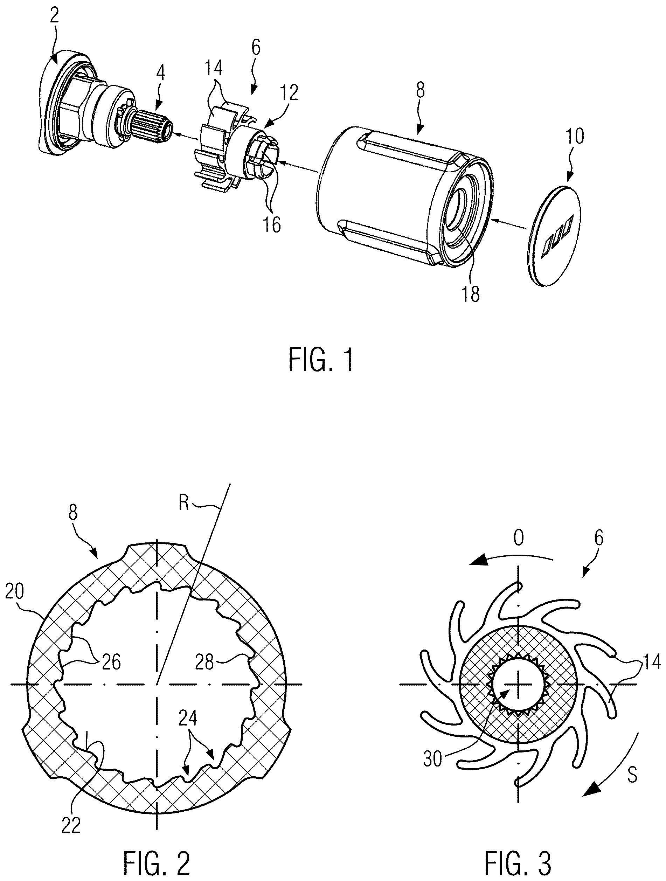

Die Figur 1 zeigt eine perspektivische Seitenansicht auf die an einem Gehäuse 2 freiliegende Welle 4, die verdrehfest mit einem Drehmomentbegrenzer 6 verbunden wird, der von einem Drehgriff 8 in sich aufgenommen wird und wobei ein der Welle 4 abgewandtes Ende des Drehgriffs 8 von einer Abdeckplatte 10 abgedeckt wird. Der Drehmomentbegrenzer 6 weist einen Rastklinkenkörper 12 mit im Wesentlichen zylindrischem Grundkörper auf. Die Rastklinken 14 sind in der ein Schließen der Trinkwasserarmatur bewirkenden Schließdrehrichtung S geneigt und gekrümmt, was insbesondere auch aus Fig. 3 ersichtlich ist. Der zylindrische Grundkörper bildet an seinem den Rastklinken 14 gegenüberliegenden Ende Rastnasen 16 aus, die mit einer Rastnasenaufnahme 18 des Drehgriffs 8 zur axialen Festlegung des Rastklinkenkörpers 12 an dem Drehgriff 8 zusammenwirken, wobei die Rastnasenaufnahme 18 durch eine Ringschulter an dem der Welle 4 abgewandten Ende des Drehgriffs 8 gebildet ist.

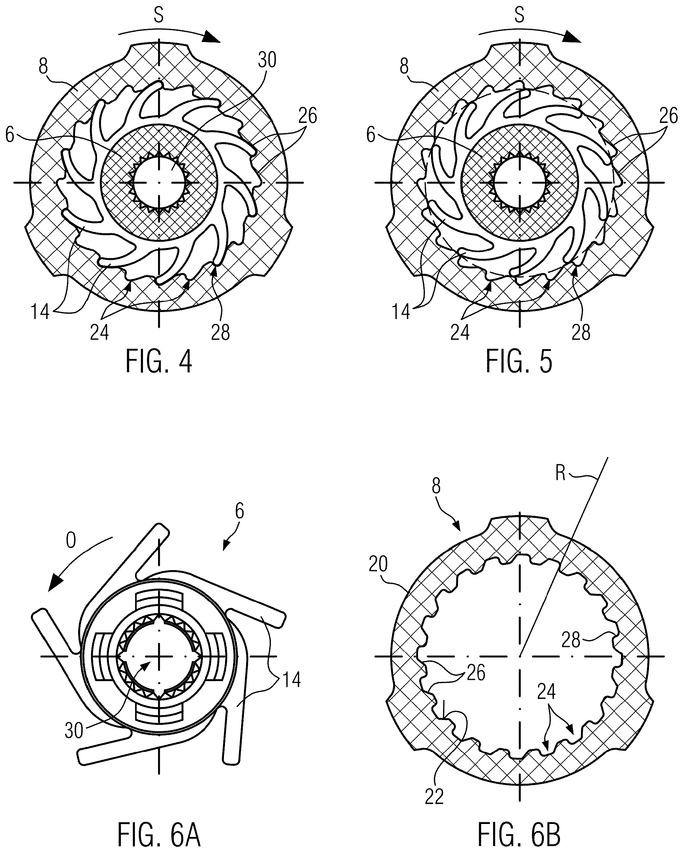

Die Figur 2 zeigt eine Querschnittansicht des Drehgriffs 8, der als eine Hülse ausgebildet ist, deren Außenumfangsfläche 20 die Außenumfangsfläche des Drehgriffs 8 bildet und an deren Innenumfang 22 Rastmulden 24 ausgebildet sind. Die Rastmulden 24 sind zur Aufnahme der Rastklinken 14 angepasst ausgebildet und wirken zur Übertragung eines Drehmomentes mit den Rastklinken 14 zusammen (siehe Fig. 4). Die Rastmulden 24 weisen jeweils eine Rampenfläche 26 auf, die die Rastklinken 14 bei einer Drehung in der Schließdrehrichtung S drehmomentabhängig nach radial innen drücken, sodass die Rastmulden 24 bei Erreichen eines Grenzdrehmomentes beim Absperren der Trinkwasserarmatur in der Schließdrehrichtung S über die Rastklinken 14 hinweggleiten (siehe Figur 5). Die Rastmulden 24 werden jeweils durch einen Anschlag 28 begrenzt, der auf einer Radiallinie R liegt, die mit dem Mittelpunkt der Drehbewegung fluchtet. In einer ein Öffnen der Trinkwasserarmatur bewirkenden Öffnungsdrehrichtung O liegen die Rastklinken 14 formschlüssig dagegen an, sodass das übertragbare Drehmoment in Öffnungsdrehrichtung nicht begrenzt ist.

Die Figur 3 zeigt eine Querschnittansicht des Drehmomentbegrenzers 6, der eine zentrale Bohrung 30 hat. Die Bohrung 30 ist mit einem Profil ausgebildet, das zu dem Profil der Welle 4 passt, sodass der Drehmomentbegrenzer 6 wie eine Nabe auf die Welle 4 aufgeschoben werden kann. Insofern wird die verdrehfeste Verbindung zwischen der Welle 4 und dem Drehmomentbegrenzer 6 durch eine in Drehrichtung formschlüssige Verbindung hergestellt.

Die Figur 4 zeigt eine Querschnittansicht des Drehgriffs 8 mit darin aufgenommenem Drehmomentbegrenzer 6. Bei einer Drehung des Drehgriffs 8 in der ein Schließen der Trinkwasserarmatur bewirkenden Schließdrehrichtung S wird durch Anlage der Rastklinken 14 an den Rampenflächen 26 ein Drehmoment übertragen, solange das Drehmoment unterhalb des Grenzdrehmoments liegt. Liegt der Ventilkörper der Trinkwasserarmatur in Folge des Zudrehens am Ventilsitz an und wird der Drehgriff 8 weiter in Schließdrehrichtung S gedreht, erreicht das Drehmoment ein Grenzdrehmoment.

Wie in Figur 5 gezeigt, werden die Rastklinken 14 bei Erreichen des Grenzdrehmoments von den Rampenflächen 26 nach radial innen gedrückt und die Rastmulden 24 gleiten über die Rastklinken 14 hinweg. Dabei federn die Rastklinken 14 nach dem Abgleiten über die Rampenflächen 26 in der nächsten Rastmulde 24 elastisch wieder zurück nach radial außen. Bei dem Zurückfedern stoßen die Rastklinken 14 gegen die Rampenfläche 26 der nächsten Rastmulde 24 an, was ein charakteristisches akustisches Signal erzeugt, das dem Benutzer signalisiert, dass die ordnungsgemäße Schließstellung der Trinkwasserarmatur erreicht ist.

Die Figur 6A zeigt eine Querschnittansicht des Drehmomentbegrenzers 6 in einer alternativen Ausführungsform, die sich darin von der zuvor beschriebenen Ausgestaltung unterscheidet, dass die Rastklinken 14 gerade, d.h. nicht gekrümmt sind. In dieser alternativen Ausführungsform erstrecken sich die Rastklinken 14 entlang einer zu dem zylindrischen Grundkörper des Rastklinkenkörpers 12 tangentialen Richtung. Figur 6B zeigt den dazugehörigen Drehgriff 8 dieser alternativen Ausführungsform. Dieser unterscheidet sich von der zuvor beschriebenen Ausgestaltung in der Steigung der Rampenfläche 26, die an die Neigung der Rastklinken 14 angepasst ist und deshalb größer ist als bei der zuvor beschriebenen Ausgestaltung.

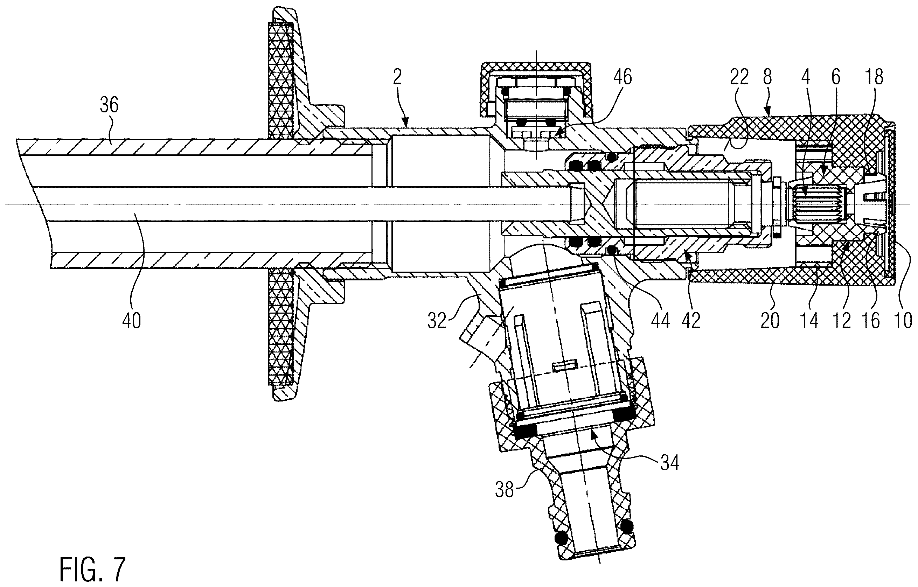

Die Figur 7 zeigt eine frostsichere Trinkwasserarmatur mit einem Gehäuse 2, aus dem die Welle 4 hervorsteht. Das Gehäuse 2 umfasst ein Einlassgehäuse, das in Fig. 7 nicht dargestellt ist und eine Einlassöffnung und einen Ventilsitz aufweist, ein Auslassgehäuse 32 mit eine Auslassöffnung 34, und ein das Einlassgehäuse mit dem Auslassgehäuse 32 verbindendes Zwischenrohr 36, wobei die Auslassöffnung 34 mit einem Schlauchanschlussstutzen 38 verbunden ist. Das Zwischenrohr 36 umgibt ein Verbindungsglied 40, das auf der einen Seite mit einem Ventilkörper verbunden ist (nicht dargestellt), der dichtend gegen den Ventilsitz anlegbar ist, und auf der anderen Seite mit einer Spindel 42 in Eingriff steht, die die Welle 4 umfasst und die Drehbewegung der Welle 4 in eine Längsbewegung des Verbindungsgliedes 40 umsetzt. Die Spindel 42 wird von dem Auslaufgehäuse 32 getragen und ist durch ein Dichtelement 44 gegenüber dem Auslaufgehäuse 32 abgedichtet.

Die Welle 4 ist verdrehfest in die Bohrung 30 des Rastklinkenkörpers 12 des Drehmomentbegrenzers 6 aufgenommen, dessen Rastklinken 14 in die Rastmulden 24 des Drehgriffs 8 aufgenommen sind (vgl. Fig. 4). Der Rastklinkenkörper 12 ist durch die Rastnasen 16, die an der Rastnasenaufnahme 18 des Drehgriffs 8 anliegen, in axialer Richtung am Drehgriff 8 gesichert. Die Abdeckplatte 10 deckt den Drehgriff stirnseitig ab.

Des Weiteren umfasst die frostsichere Trinkwasserarmatur ein Belüftungsventil 46, das eine Belüftungsöffnung freigibt, wenn der Ventilkörper dichtend gegen den Ventilsitz anliegt. Das Zwischenrohr 36 ist leicht nach unten geneigt, sodass Wasser auch bei abgesperrter Armatur auslaufen kann. Damit dies leicht geschehen kann, lässt das Belüftungsventil Luft in die Armatur, so dass kein Unterdruck entsteht. Dem Belüftungsventil 46 kann ein Mechanismus zur Zwangsbelüftung zugeordnet sein, so wie es beispielsweise aus EP 1 557 500 A1 bekannt ist.

### Bezugszeichenliste

- 2: Gehäuse
- 4: Welle
- 6: Drehmomentbegrenzer
- 8: Drehgriff
- 10: Abdeckplatte
- 12: Rastklinkenkörper
- 14: Rastklinken
- 16: Rastnasen
- 18: Rastnasenaufnahme
- 20: Außenumfang
- 22: Innenumfang
- 24: Rastmulden
- 26: Rampenfläche
- 28: Anschlag
- 30: Bohrung
- 32: Auslassgehäuse
- 34: Auslassöffnung
- 36: Zwischenrohr
- 38: Schlauchanschlussstutzen
- 40: Verbindungsglied
- 42: Spindel
- 44: Dichtelement
- 46: Belüftungsventil
- O: Öffnungsdrehrichtung
- R: Radiallinie
- S: Schließdrehrichtung

## Patentansprüche

1. Trinkwasserarmatur mit einem Gehäuse (2) mit Ein- und Auslassöffnungen und einem dazwischen vorgesehenen Ventilsitz sowie einem Ventilkörper, der dichtend gegen den Ventilsitz anlegbar und über eine Welle (4) stellbar ist, die mit einem Drehgriff (8) zum manuellen Aufbringen eines Drehmomentes verbunden ist, und mit einem Drehmomentbegrenzer (6), der das manuell aufgebrachte Drehmoment auf die Welle (4) überträgt, **dadurch gekennzeichnet, dass** der Drehmomentbegrenzer (6) einen Rastklinkenkörper (12) mit Rastklinken (14) aufweist, die mit Rastmulden (24) des Drehgriffs (8) im Eingriff sind, wobei die Rastmulden (24) jeweils eine Rampenfläche (26) aufweisen, über welche die Rastklinken (14) bei Erreichen eines Grenzdrehmomentes im Rahmen der Drehbewegung beim Absperren der Trinkwasserarmatur aus der jeweiligen Rastmulde (24) herausgleiten.

2. Trinkwasserarmatur nach Anspruch 1, **dadurch gekennzeichnet, dass** die Rastklinken (14) bei einer Drehung des Drehgriffes (8) in eine ein Öffnen der Trinkwasserarmatur bewirkenden Öffnungsdrehrichtung (O) formschlüssig gegen einen die Rastmulde (24) begrenzenden Anschlag (28) anliegen.

3. Trinkwasserarmatur nach Anspruch 2, **dadurch gekennzeichnet, dass** der Anschlag (28) auf einer Radiallinie (R) liegt, die mit dem Mittelpunkt der Drehbewegung fluchtet.

4. Trinkwasserarmatur nach einem der Ansprüche 1 bis 3, **dadurch gekennzeichnet, dass** das Grenzdrehmoment zwischen 0,5 Nm und 4 Nm, bevorzugt zwischen 1 Nm und 3 Nm, und besonders bevorzugt zwischen 1,5 Nm und 2 Nm liegt.

5. Trinkwasserarmatur nach einem der Ansprüche 1 bis 4, **dadurch gekennzeichnet, dass** der Drehgriff (8) eine die Außenumfangsfläche des Drehgriffs (8) ausbildende Hülse aufweist, an deren Innenumfang (22) die Rastmulden (24) ausgebildet sind, die zur Übertragung des Drehmomentes mit den Rastklinken (14) zusammenwirken und bei Erreichen eines Grenzdrehmomentes beim Absperren der Trinkwasserarmatur über die Rastklinken (14) hinweggleiten.

6. Trinkwasserarmatur nach Anspruch 5, **dadurch gekennzeichnet, dass** der Rastklinkenkörper (12) und die Hülse aus Kunststoff gebildet sind.

7. Trinkwasserarmatur nach einem der Ansprüche 1 bis 6, **gekennzeichnet durch** eine Bohrung (30) im Rastklinkenkörper (12) zur verdrehfesten Aufnahme der Welle (4).

8. Trinkwasserarmatur nach einem der vorherigen Ansprüche, soweit von Anspruch 5 und 7 abhängig, **dadurch gekennzeichnet, dass** die Hülse ein einteiliges Bauteil ist, welches die Außenumfangsfläche des Drehgriffs (8) und den Innenumfang (22) mit den Rastmulden (24) ausformt, dass der Rastklinkenkörper (12) durch ein einheitliches Bauteil gebildet ist, an dessen Außenumfang die Rastklinken (14) ausgebildet sind und dessen Innenumfang verdrehfest mit der Welle (4) gekoppelt ist.

9. Trinkwasserarmatur nach einem der Ansprüche 1 bis 8, **dadurch gekennzeichnet, dass** die Rastklinken (14) nach Art von Federarmen ausgebildet und in einer Querschnittsansicht auf den Drehgriff (8) in eine ein Schließen der Trinkwasserarmatur bewirkenden Schließdrehrichtung (S) geneigt, insbesondere gekrümmt sind.

10. Trinkwasserarmatur nach einem der Ansprüche 1 bis 9, **dadurch gekennzeichnet, dass** der Rastklinkenkörper (12) ein von den Rastklinken (14) in axialer Richtung abragenden Zylinderabschnitt aufweist, der zumindest eine Rastnase (16) aufweist, die mit zumindest einer an dem Drehgriff (8) ausgebildeten Rastaufnahme (18) zur axialen Festlegung des Rastklinkenkörpers (12) an dem Drehgriff (8) zusammenwirkt.

11. Trinkwasserarmatur nach einem der vorherigen Ansprüche, **dadurch gekennzeichnet, dass** das Gehäuse (2) ein Einlassgehäuse mit der Einlassöffnung, ein Auslassgehäuse (32) mit der Auslassöffnung (34) und ein das Einlassgehäuse und das Auslassgehäuse (32) verbindendes Zwischenrohr (36) umfasst, das derart bemessen ist, dass das Einlassgehäuse im Innenbereich eines Gebäudes und das Auslassgehäuse (32) eine Außenwand des Gebäudes überragend angeordnet werden können, wobei der Ventilsitz im Einlassgehäuse vorgesehen ist und der Ventilkörper mit einem von dem Zwischenrohr (36) umgebenden Verbindungsglied (40) verbunden ist, welches mit einer von dem Auslassgehäuse (32) getragenen und mit der Welle (4) verbundenen Spindel (42) in Eingriff steht, und wobei die Trinkwasserarmatur ein Belüftungsventil (46) umfasst, das eine Belüftungsöffnung freigibt, wenn der Ventilkörper dichtend gegen den Ventilsitz anliegt.

## Claims

1. Drinking water fitting with a housing (2) with inlet and outlet openings and a valve seat provided between them, as well as a valve body that can be sealed against the valve seat and adjusted via a shaft (4) connected to a rotary handle (8) for manually applying torque, and with a torque limiter (6) which transmits the manually applied torque to the shaft (4), **characterized in that** the torque limiter (6) has a ratchet body (12) with ratchet teeth (14) which engage with detent recesses (24) in the rotary handle (8), wherein the detent recesses (24) each have a ramp surface (26) over which the ratchet teeth (14) slide out of the respective detent recess (24) when a limit torque is reached during the rotary movement when shutting off the drinking water fitting.

2. Drinking water fitting according to claim 1, **characterized in that**, when the rotary handle (8) is rotated in a direction of rotation (O) that causes the drinking water fitting to open, the ratchet teeth (14) bear in a form-fitting manner against a stop (28) that limits the detent recess (24).

3. Drinking water fitting according to claim 2, **characterized in that** the stop (28) lies on a radial line (R) that is aligned with the center of the rotary movement.

4. Drinking water fitting according to one of claims 1 to 3, **characterized in that** the limit torque is between 0.5 Nm and 4 Nm, preferably between 1 Nm and 3 Nm, and particularly preferably between 1.5 Nm and 2 Nm.

5. Drinking water fitting according to one of claims 1 to 4, **characterized in that** the rotary handle (8) has a sleeve forming the outer circumferential surface of the rotary handle (8), on the inner circumference (22) of which the detent recesses (24) are formed, which cooperate with the ratchet teeth (14) to transmit the torque and, when a limit torque is reached when the drinking water fitting is shut off, slide over the ratchet teeth (14).

6. Drinking water fitting according to claim 5, **characterized in that** the ratchet body (12) and the sleeve are made of plastic.

7. Drinking water fitting according to one of claims 1 to 6, **characterized by** a bore (30) in the ratchet body (12) for receiving the shaft (4) in a rotationally secure manner.

8. Drinking water fitting according to one of the previous claims, insofar as dependent on claims 5 and 7, **characterized in that** the sleeve is a one-piece component which forms the outer circumferential surface of the rotary handle (8) and the inner circumference (22) with the detent recesses (24), that the ratchet body (12) is formed by a uniform component, on the outer circumference of which the ratchet teeth (14) are formed and the inner circumference of which is coupled to the shaft (4) in a rotationally fixed manner.

9. Drinking water fitting according to one of claims 1 to 8, **characterized in that** the ratchet teeth (14) are designed in the manner of spring arms and, in a cross-sectional view on the rotary handle (8), are inclined, in particular curved, in a closing direction of rotation (S) that causes the drinking water fitting to close.

10. Drinking water fitting according to one of claims 1 to 9, **characterized in that** the ratchet body (12) has a cylindrical section projecting in the axial direction from the ratchet teeth (14), which has at least one detent lug (16) that cooperates with at least one detent receptacle (18) formed on the rotary handle (8) for axially fixing the ratchet body (12) to the rotary handle (8).

11. Drinking water fitting according to one of the preceding claims, **characterized in that** the housing (2) comprises an inlet housing with the inlet opening, an outlet housing (32) with the outlet opening (34), and an intermediate pipe (36) connecting the inlet housing and the outlet housing (32), which is dimensioned such that the inlet housing can be arranged inside a building and the outlet housing (32) can be arranged protruding beyond an outer wall of the building, wherein the valve seat is provided in the inlet housing and the valve body is connected to a connecting member (40) surrounding the intermediate pipe (36), which is engaged with a spindle (42) carried by the outlet housing (32) and connected to the shaft (4), and wherein the drinking water fitting comprises a vent valve (46) which opens a vent opening when the valve body is sealingly engaged against the valve seat.

## Revendications

1. Robinetterie d'eau potable avec un corps (2) présentant des orifices d'entrée et de sortie et un siège de soupape fourni entre lesdits orifices, ainsi qu'un corps de soupape qui peut être appliqué de manière étanche contre le siège de soupape et qui peut être réglé par l'intermédiaire d'un arbre (4) qui est relié à une poignée rotative (8) permettant d'appliquer manuellement un couple, et avec un limiteur de couple (6) qui transmet à l'arbre (4) le couple appliqué manuellement, **caractérisée en ce que** le limiteur de couple (6) présente un corps à cliquets (12) avec des cliquets (14) qui sont en prise avec des creux d'encliquetage (24) de la poignée rotative (8), dans laquelle les creux d'encliquetage (24) présentent respectivement une surface de rampe (26) par l'intermédiaire de laquelle les cliquets (14) glissent hors du creux d'encliquetage (24) respectif lorsqu'un couple limite est atteint dans le cadre du mouvement de rotation lors de la coupure de la robinetterie d'eau potable.

2. Robinetterie d'eau potable selon la revendication 1, **caractérisée en ce que,** lors d'une rotation de la poignée rotative (8) dans un sens de rotation d'ouverture (O) provoquant l'ouverture de la robinetterie d'eau potable, les cliquets (14) viennent se verrouiller par complémentarité de forme contre une butée (28) délimitant le creux d'encliquetage (24).

3. Robinetterie d'eau potable selon la revendication 2, **caractérisée en ce que** la butée (28) est située sur une ligne radiale (R) alignée avec le point central du mouvement de rotation.

4. Robinetterie d'eau potable selon l'une quelconque des revendications 1 à 3, **caractérisée en ce que** le couple limite est compris entre 0,5 Nm et 4 Nm, de manière préférée entre 1 Nm et 3 Nm, et de manière particulièrement préférée entre 1,5 Nm et 2 Nm.

5. Robinetterie d'eau potable selon l'une quelconque des revendications 1 à 4, **caractérisée en ce que** la poignée rotative (8) présente une douille formant la surface circonférentielle extérieure de la poignée rotative (8) et sur la circonférence intérieure (22) de laquelle sont formées les creux d'encliquetage (24) qui coopèrent avec les cliquets (14) afin de transmettre le couple et qui glissent sur les cliquets (14) lorsqu'un couple limite est atteint lors de la coupure de la robinetterie d'eau potable.

6. Robinetterie d'eau potable selon la revendication 5, **caractérisée en ce que** le corps à cliquets (12) et la douille sont réalisés en plastique.

7. Robinetterie d'eau potable selon l'une quelconque des revendications 1 à 6, **caractérisée par** un alésage (30) dans le corps à cliquets (12) afin d'accueillir l'arbre (4) de manière solidaire en rotation.

8. Robinetterie d'eau potable selon l'une quelconque des revendications précédentes, dans la mesure où elles dépendent des revendications 5 et 7, **caractérisée en ce que** la douille est un composant d'une seule pièce qui forme la surface circonférentielle extérieure de la poignée rotative (8) et la circonférence intérieure (22) munie des creux d'encliquetage (24), et **en ce que** le corps à cliquets (12) est formé par un composant homogène sur la circonférence extérieure duquel sont formés les cliquets (14) et dont la circonférence intérieure est couplée de manière solidaire en rotation à l'arbre (4).

9. Robinetterie d'eau potable selon l'une quelconque des revendications 1 à 8, **caractérisée en ce que** les cliquets (14) sont réalisés à la manière de bras élastiques et, dans une vue en coupe transversale de la poignée rotative (8), sont inclinés, en particulier incurvés, dans un sens de rotation de fermeture (S) provoquant la fermeture de la robinetterie d'eau potable.

10. Robinetterie d'eau potable selon l'une quelconque des revendications 1 à 9, **caractérisée en ce que** le corps à cliquets (12) présente une section de cylindre faisant saillie dans la direction axiale à partir des cliquets (14) et présentant au moins un ergot d'encliquetage (16) qui coopère avec au moins un logement d'encliquetage (18) formé au niveau de la poignée rotative (8) en vue d'une fixation axiale du corps à cliquets (12) sur la poignée rotative (8).

11. Robinetterie d'eau potable selon l'une quelconque des revendications précédentes, **caractérisée en ce que** le corps (2) comprend un corps d'entrée présentant l'orifice d'entrée, un corps de sortie (32) présentant l'orifice de sortie (34) et un tube intermédiaire (36) qui relie le corps d'entrée et le corps de sortie (32) et est dimensionné de telle manière que le corps d'entrée peut être agencé de manière à dépasser à l'intérieur d'un bâtiment et le corps de sortie (32) peut être agencé de manière à dépasser d'une paroi extérieure du bâtiment, dans laquelle le siège de soupape est fourni dans le corps d'entrée et le corps de soupape est relié à un élément de connexion (40) qui entoure le tube intermédiaire (36) et est en prise avec une broche (42) portée par le corps de sortie (32) et reliée à l'arbre (4), et dans laquelle la robinetterie d'eau potable comprend une soupape de ventilation (46) qui libère un orifice de ventilation lorsque le corps de soupape repose de manière étanche contre le siège de soupape.
